# EUROPÄISCHE PATENTANMELDUNG

(11) **EP 4 096 067 A1**
(43) Veröffentlichungstag der Anmeldung: **30.11.2022**
(21) Anmeldenummer: 21176676.1
(22) Anmeldetag: 28.05.2021
(51) Int. Cl.: H02K 7/08, H02K 9/19, F16C 37/00, F16C 33/66

(54) **DYNAMOELEKTRISCHE MASCHINE MIT ÖLGEKÜHLTEM LAGER**

(71) Anmelder: Siemens Aktiengesellschaft, 80333 München (DE)
(72) Erfinder: DOSTÁL, Jiri, 66424 Drásov (CZ); LANGE, Thomas, 90766 Fürth (DE); RESSEL, Ekkehard, 91560 Heilsbronn (DE)

(57) **Zusammenfassung**

Die Erfindung betrifft eine dynamoelektrische Maschine (1), insbesondere Hochspannungsmaschine mit,
einer NDE-Seite und einer DE-Seite, wobei die DE-Seite einer anzutreibenden Arbeitsmaschine zugewandt ist,
einem Stator (41), der ein Wicklungssystem (39) aufweist, der durch elektromagnetische Wechselwirkung eine Rotation eines Rotors (42) bewirkt, welcher Rotor (42) mit einer Antriebswelle (3) drehfest verbunden ist,

zumindest einem ölgeschmierten Lager (10,20), das die Antriebswelle (3) führt und/oder hält, einem Kühlsystem des Öls des Lagers (10,20), das zumindest einen Rückkühler (8) und die dazu notwendige Verrohrung von und zu dem Lager (10, 20) aufweist, wobei eine Förderung des Öls von, durch und zum Lager (10,20) mittels zumindest einer Fördereinrichtung erfolgt, die direkt mit der Antriebswelle (3) gekoppelt ist, so dass bei Drehung der Antriebswelle (3) eine Ölförderung erfolgt.

## Beschreibung

Die Erfindung betrifft eine dynamoelektrische rotatorische Maschine mit zumindest einem ölgekühlten Lager.

Dynamoelektrische rotatorische Maschinen weisen einen Stator und einen Rotor auf, wobei durch elektromagnetische Wechselwirkung des bestromten Wicklungssystems des Stators der Rotor in Drehung versetzt wird. Die mit dem Rotor drehfest verbundene Antriebswelle treibt eine Arbeitsmaschine, wie beispielsweise einen Kompressor oder einen Lüfter an. Diese Antriebswelle ist dabei in Lagern der dynamoelektrischen rotatorischen Maschine positioniert. Bei größeren Maschinen sind die Lager vorzugsweise ölgekühlt. Je nach Drehzahl, Temperatur und Belastung der Maschine kann die Öltemperatur der Lager, wie von natürlich (konvektions) gekühlten Gleitlagern und ölgeschmierten Wälzlagern eine vorgegebene, den Betrieb beeinträchtigende, Temperaturgrenze überschreiten.

Zur Begrenzung der Öltemperatur ist deshalb ein externes Ölkühlsystem mit einer motorgetriebenen Pumpe und einem Wärmetauscher (Öl-Luft-Kühler mit Gebläse o.ä.) vorgesehen.

Bei Ausfall der Spannungsversorgung (Niederspannungsleitung) des Öl-Kühlsystems oder bei Ausfall des Pumpen- oder Gebläsemotors, muss deshalb die dynamoelektrische rotatorische Maschine, auch als Hauptmaschine bezeichnet (z.B. eine Hochspannungsmaschine), abgeschaltet werden, da ein sicherer Betrieb der Hauptmaschine nicht mehr gewährleistet werden kann.

Nachteilig ist aber auch, dass ein sicherer Auslauf dieser Hauptmaschine (ca. 10 min) nicht mehr gewährleistet ist. Je nach Betriebsbedingungen kann die Öltemperatur dabei stark ansteigen, wobei die Ölviskosität sinkt und die erforderliche Ölfilmdicke zu gering wird, um die Antriebswelle vom Lager zu trennen.

In diesen Fällen muss mit Schäden an Lagerzapfen und Antriebswelle gerechnet werden. Durch überhöhte Öl- und Lagertemperaturen können z.B. Wälzlager beschädigt werden, insbesondere kann das Lagerspiel zu einer Vorspannung des Lagers werden, was die Verluste und die Temperatur erhöht und letztendlich zu einem Lagerschaden führt.

Eine durch Lüfter iniziierte Luftkühlung einer Lagerhülse oder des Gleitlagers führt dort nur zu geringen Kühleffekten und ist daher nur in einigen Betriebsfällen geeignet.

Redundante Stromversorgungssysteme der Pumpen, um einen Ausfall der Stromversorgung zu überbrücken, kann die oben beschriebene Störung im elektrischen System des Kühlsystems nicht grundsätzlich beheben.

Für einen sicheren Auslauf der dynamoelektrischen Maschine werden manchmal auch Öl-Vorratsbehälter verwendet, die höher als die Lager eingebaut sind. Ein kontinuierlicher Betrieb der dynamoelektrischen Maschine ist so nicht möglich.

Ausgehend davon liegt der Erfindung die Aufgabe zugrunde, eine zuverlässige Ölkühlung der Lager einer dynamoelektrischen Maschine, insbesondere einer Hochspannungsmaschine zu schaffen.

Die Lösung der Aufgabe gelingt durch eine dynamoelektrische Maschine, insbesondere Hochspannungsmaschine mit, einer NDE-Seite und einer DE-Seite, wobei die DE-Seite einer anzutreibenden Arbeitsmaschine zugewandt ist,
einem Stator, der ein Wicklungssystem aufweist, der durch elektromagnetische Wechselwirkung eine Rotation eines Rotors bewirkt, welcher Rotor mit einer Antriebswelle drehfest verbunden ist,
zumindest einem ölgeschmierten Lager (Gleit- und Wälzlager), das die Antriebswelle führt und/oder hält,
einem Kühlsystem des Öls des Lagers, das zumindest einen Rückkühler und die dazu notwendige Verrohrung von und zu dem Lager aufweist, wobei eine Förderung des Öls von, durch und zum Lager mittels zumindest einer Fördereinrichtung erfolgt, die direkt mit der Antriebswelle gekoppelt ist, so dass bei Drehung der Antriebswelle eine Ölförderung erfolgt.

Die erfindungsgemäße dynamoelektrische Maschine weist ein Kühlsystem, zumindest eines ölgekühlten Lagers seiner Antriebswelle auf, dessen Fördereinrichtung des Öls, z.B. einer Ölpumpe und/oder eines Gebläses (z.B. Eigenlüfter) oder eines Gebläsemotors unabhängig von einer externen (Hilfs-) Stromversorgung arbeitet. Somit ist auch bei Ausfall dieser Stromversorgung oder einer Fehlfunktion eines der elektrischen Geräte (Motor, Schalter, Kabel etc.) ein kontinuierlicher Betrieb der dynamoelektrischen rotatorischen Maschine, also der Hauptmaschine, weiter gewährleistet. Damit werden auch ungeplante Abschaltungen der Hauptmaschine vermieden, was die Verfügbarkeit der dynamoelektrischen rotatorischen Maschine erhöht.

Das Lager bzw. die Lager können Gleit- oder Wälzlager sein, die eine Ölschmierung aufweisen, wobei das Öl dieser Lager umgewälzt und rückgekühlt wird. Ebenso können es Lageranordnungen bzw. Lagerkombinationen aus Festlagern und Stützlagern sein, die sich aus zwei oder mehreren unmittelbar aneinandergrenzenden Einzellagern zusammensetzen, um die radialen und axialen Kräfte aufnehmen zu können, wie z.B. ein Festlager, das Zylinderrollenlager und Vierpunktlager aufweist. Ebenso kann es sich um ein Festlager das Zylinderrollenlager und ein Axialrillenkugellager aufweist. Ebenso kann es sich auch um ein Festlager in O-Anordnung oder X-Anordnung handeln. Eine erfindungsgemäße Ölschmierung eines Lagers kann auch bei einem Stützlager in Tandemanordnung erfolgen.

Des Weiteren lässt sich das erfindungsgemäße integrierte Ölkühlsystem auch bei vorhandenen dynamoelektrischen rotatorischen Maschinen nachrüsten. Das erfindungsgemäße integrierte Ölkühlsystem ist u.a. durch die Verwendung bestehender Komponenten kostengünstiger als externe Kühlgeräte.

Die Pumpenanordnung weist u.a. eine Pumpe mit den erforderlichen Anschlüssen, eine Anordnung eines Pumpenlagers, eine Drehmomentenstütze und einen Wellenzapfen zur Kopplung an die Antriebswelle, auf. Die Pumpe wird direkt von der Antriebswelle der dynamoelektrischen Maschine angetrieben und zirkuliert bzw. fördert das Öl vom Lager oder den Lagern, insbesondere Gleitlager, zu den jeweiligen Kühlvorrichtungen und zurück zu dem Lager. Antriebswelle, Wellenzapfen und Pumpenwelle sind dabei axial fluchtend angeordnet.

Dabei ist eine Pumpenwelle mit der Antriebswelle axial fluchtend angeordnet, was zumindest vor allem bei einem geringeren Abstand zu einer Arbeitsmaschine einen Einbauort auf der NDE-Seite der dynamoelektrischen Maschine erfordert. Dies gestattet auch eine vergleichsweise bessere Zugänglichkeit der Pumpenanordnung für Wartungszwecke.

Die Pumpenwelle ist in einer weiteren Ausführung parallel zu der Antriebswelle ausgerichtet und wird dabei durch einen Riemen oder Zahnräder von der Antriebswelle angetrieben. Dies gestattet auch eine Anordnung auf der DE-Seite der dynamoelektrischen Maschine.

In einer weiteren Ausgestaltung ist die Pumpenwelle und/oder ein Wellenzapfen als Kupplung zwischen Antriebswelle und Pumpenwelle hohl oder zumindest abschnittsweise hohl ausgeführt, was den Materialaufwand und das Gewicht der Fördereinrichtung bzw. Pumpenanordnung reduziert.

Eine Rückkühlung des Öls der Lager kann erfindungsgemäß auf unterschiedliche Weise erfolgen. Dabei steht ebenfalls im Vordergrund, dass die Rückkühlung des Öls von externen Stromversorgungen möglichst unabhängig sein soll.

In einer Ausführung wird ein Öl-Luft-Wärmetauscher als Rücckühler verwendet. Dies ist besonders vorteilhaft, wenn die dynamoelektrische Maschine als luftgekühlte Maschine ausgeführt ist. Der Rückkühler des Öls ist dabei in den Luftweg eingebaut, bevorzugt an der Lufteintrittsseite in die Maschine, aber auch eine Platzierung am Luftaustritt aus der Maschine ist möglich.

Ebenso kann der Rückkühler auf der NDE-Seite vor oder nach einem Lüfter, insbesondere einem Eigenlüfter der dynamoelektrischen Maschine, angeordnet sein. Dies unterstützt den autarken Betrieb der dynamoelektrischen Maschine, da eine Rotation der Antriebswelle eine Rotation des Eigenlüfters und der Pumpe herbeiführt.

Dies ist für alle Schutzarten der dynamoelektrischen Maschine möglich, egal ob es sich um eine offene, direkt belüftete, eine völlig geschlossene Maschine oder eine rohrbelüftete Maschine und damit implizit auch um eine geschlossene Maschine handelt.

Als offene dynamoelektrische Maschine wird dabei eine Maschine verstanden, in die Umgebungsluft geführt wird, also Umgebungsluft mit den Aktivteilen (z.B. Stator, Wicklungssystem...) der Maschine direkt in Kontakt steht.

Als direkt belüftete dynamoelektrische Maschine wird dabei eine Maschine verstanden, bei der Umgebungsluft nicht in die Maschine dringt. Eine Rückkühlung der ggf. innerhalb der Maschine umwälzten Luft findet über Aufsatzkühler, z.B. Röhren- oder Plattenkühler oder lediglich über Konvektion statt.

Des Weiteren eignet sich die Erfindung auch für folgende Kühlarten von dynamoelektrischen Maschinen, u.a. auch für Maschinen in explosionsgeschützten Bereichen, wie z.B. des Bergbaus. Dabei sind dann sämtliche Komponenten der dynamoelektrischen Maschine, wie Gehäuse, Verrohrungen etc., darauf auszurichten, dass sich keine statische Aufladung im Betrieb ergibt.

Die erfindungsgemäße Ausführung der ölgekühlten Lager ist für dynamoelektrische Maschinen folgender Kühlarten geeignet:
Diese Kühlarten sind im Einzelnen:

| **Kühlart** | |
|---|---|
| IC01 | Luftgekühlt, eigenbelüftet |
| IC81W | Luft/Wasser-Kühler, Innenkühlkreislauf eigenbelüftet |
| IC86W | Luft/Wasser-Kühler, Innenkühlkreislauf fremdbelüftet |
| IC611 | Luft/Luft-Kühler, Innenkühlkreislauf eigenbelüftet, Außenkühlkreislauf eigenbelüftet |
| IC616 | Luft/Luft-Kühler, Innenkühlkreislauf eigenbelüftet, Außenkühlkreislauf eigenbelüftet |
| IC666 | Luft/Luft-Kühler, Innenkühlkreislauf eigenbelüftet, Außenkühlkreislauf fremdbelüftet |
| TEWAC | Geschlossener Motor mit Luft/Wasser-Kühler |
| TEAAC | Geschlossener Motor mit Luft/Luft-Kühler |

Die erfindungsgemäße Ausführung der ölgekühlten Lager ist somit auch ergänzend für dynamoelektrische Maschinen folgender Zündschutzarten geeignet:

| **Zündschutzart** | |
|---|---|
| Ex nA | Nichtfunkender Motor, Zone 2 |
| Ex px | Überdruckkapselung des Motors, erhöhte Sicherheit des Klemmenkastens, Zone 1 |
| Class 1, Div 2 | Nichtfunkender Motor |

Die erfindungsgemäße Ausführung der ölgekühlten Lager ist somit auch ergänzend für dynamoelektrische Maschinen geeignet, die als Compact-Maschinen HVC mit folgenden Kühlarten und/oder Zündschutzarten ausgeführt sind:

| **Kühlart** | |
|---|---|
| IC411 | Rippen-luftgekühlt, eigenbelüftet |
| IC416 | Rippen-luftgekühlt, fremdbelüftet |
| IC71W | Wassermantelgekühlt |

| **Zündschutzart** | |
|---|---|
| Ex nA | Nichtfunkender Motor, Zone 2 |
| Ex pe | Überdruckkapselung des Motors, erhöhte Sicherheit des Klemmenkastens, Zone 1 |
| Ex e | Erhöhte Sicherheit des Motors, Zone 1 |

Ebenso sind die ölgekühlten Lager grundsätzlich auch für eine dynamoelektrische Maschinen in der Kühlart IC511 röhrengekühlt geeignet, insbesondere wenn der Kühler als Aufsatzkühler ausgeführt ist.

Ebenso sind die ölgekühlten Lager auch für eine dynamoelektrische Maschine mit Plattenkühlern als Aufsatzkühler geeignet.

Der Rückkühler kann auch in dem Luftstrom angeordnet sein, der durch schachtmontierte Ventilatoren zur dynamoelektrischen Maschine geführt wird. Ebenso kann der Rückkühler in dem Luftstrom angeordnet sein, der z.B. durch einen separaten Fremdlüfter der dynamoelektrischen Maschine erzeugt wird. Der autarke Betrieb der dynamoelektrischen Maschine wird dabei nur bedingt erreicht.

Falls zwei ölgeschmierte Lager die Antriebswelle an der dynamoelektrischen Maschine halten - was normalerweise außer z.B. bei einer fliegenden Lagerung der Antriebswelle der Fall sein wird, - wird, falls die Öltemperatur nur in einem der beiden Lager überschritten wird, das rückgekühlte Öl vorzugsweise zunächst dem wärmeren Lager zumindest teilweise zur Verfügung gestellt und erst danach dem kälteren Lager. Dies kann durch Sensoren überwacht werden, die die Öltemperatur und die Lagertemperatur erfassen und dementsprechende Stellventile den Ölfluss beeinflussen.

Alternativ dazu kann auch nur ein Lager durch den Ölumlauf gekühlt werden, vorzugsweise das Lager auf der DE-Seite. Das Lager auf der NDE-Seite wäre einem Luftstrom eines Lüfters (Eigen- oder Fremdlüfters) ausgesetzt und damit ggf. ausreichend gekühlt.

In allen Fällen beginnt der Betrieb der Pumpe mit der Drehung der Antriebswelle der dynamoelektrischen Maschine, also der Hauptmaschine und diese Pumpe stoppt erst, wenn die Hauptmaschine zum Stillstand kommt und damit die Antriebswelle die Drehzahl Null hat.

In einer Ausführung arbeiten die Kühleinrichtungen unabhängig von zusätzlicher Energiezufuhr unter alleiniger Verwendung der Rotation der Antriebswelle. Mit anderen Worten, die Pumpe zur Förderung des Öls für die Lager, die Lüfter, insbesondere Eigenlüfter oder eine Pumpe eines Wasserkreislaufs des Rücckühlers ist von externer Energiezufuhr unabhängig. Fehlfunktionen des elektrischen Systems der Kühleinrichtung können somit nicht auftreten, da sie nicht vorhanden sind.

Ein sicheres Auslaufen auch bei Ausfall aller Stromversorgungen ist durch das autonome Kühlsystem, insbesondere der Lager, gewährleistet.

Das Ölkühlsystem arbeitet unabhängig von der externen Stromversorgung. Dies gilt sowohl für die Ölpumpe als auch ggf. für die Pumpen des Rückkühlers oder weiterer Kühlgeräte. Ein Ausfall der Spannungsversorgung oder Fehlfunktionen führen nicht zu Beeinträchtigungen des Betriebes bzw. zum Stillstand der Hauptmaschine.

Eine höhere Verfügbarkeit der kundenseitigen Anlage ist gewährleistet. Die autonome Ölkühlung ist kostengünstiger als ein externes Kühlungssystem, da die Komplexität und die Schnittstellen gegenüber herkömmlichen Systemen deutlich reduziert sind.

Falls zusätzlich elektrische Energie für Hilfsaggregate an der dynamoelektrischen Maschine bereitgestellt werden müsste, wäre dies ggf. über einen an der Antriebswelle oder Wellenzapfen angeordneten Kleingenerator möglich.

Die Erfindung sowie vorteilhafte Ausgestaltungen der Erfindung werden anhand prinzipiell dargestellter Ausführungsbeispiele näher erläutert; darin zeigen:
- FIG 1: einen prinzipiellen Längsschnitt einer dynamoelektrischen Maschine,
- FIG 2: eine Seitenansicht einer dynamoelektrischen Maschine,
- FIG 3: ein prinzipielles Strömungs-Ersatzschaltbild,
- FIG 3A: ein weiteres Strömungs-Ersatzschaltbild,
- FIG 4: eine weitere Seitenansicht einer dynamoelektrischen Maschine,
- FIG 5: ein weiteres prinzipielles Strömungs-Ersatzschaltbild,
- FIG 6: eine weitere Seitenansicht einer dynamoelektrischen Maschine,
- FIG 7: ein weiteres prinzipielles Strömungs-Ersatzschaltbild,
- FIG 8: eine Explosionsdarstellung einer Pumpenanordnung,
- FIG 9: ein Längsschnitt der Pumpenanordnung,
- FIG 10: eine Seitenansicht der Pumpenanordnung,
- FIG 11: eine Detaildarstellung der Lagerung der Pumpenanordnung.

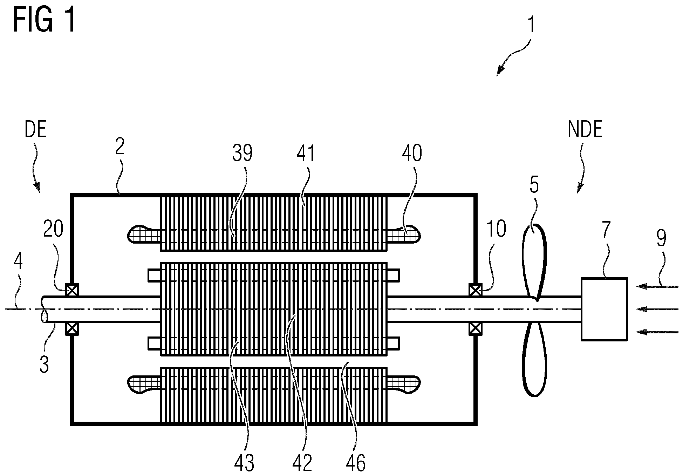

FIG 1 zeigt in einer prinzipiellen Darstellung eine dynamoelektrische Maschine 1, bei der in einem Gehäuse 2 ein Stator 41 mit einem Wicklungssystem 39 angeordnet ist, wobei das Wicklungssystem 39 an den Stirnseiten des Stators 41 einen Wickelkopf 40 ausbildet. Die dynamoelektrische Maschine 1 kann dabei u.a. eine Synchronmaschine oder eine Asynchronmaschine sein. Die dynamoelektrische Maschine 1 kann eine Hochspannungsmaschine (Nennspannung > 1kV) oder auch eine Niederspannungsmaschine (Nennspannung < 1kV) sein.

Durch elektromagnetische Wechselwirkung mit einem Rotor 42, der mit einer Antriebswelle 3 drehfest verbunden ist, wird eine Rotation des Rotors 42 um eine Achse 4 herbeigeführt. Ein Luftspalt 44 trennt dabei Stator 41 und Rotor 42.

Der Rotor 42 kann dabei als Käfigläufer mit einem Kurzschlusskäfig 43 oder als permanenterregter Rotor ausgeführt sein.

Die Antriebswelle 3 ist in Lagern 10, 20 gehalten und geführt, wobei das Lager 10 auf dem Non-Drive-End-(NDE-)Seite und das Lager 20 auf der Drive-End-(DE-)Seite der dynamoelektrischen Maschine 1 angeordnet ist.

Auf der Antriebswelle 3 ist ein Lüfter 5 angeordnet, der als Eigenlüfter ausgeführt ist und bei Drehung der Antriebswelle 3 einen Luftstrom in und/oder an bzw. auf das Gehäuse 2 der dynamoelektrischen Maschine 1 bewirkt. In axialer Flucht der Antriebswelle 3 ist eine Pumpen-Anordnung 7 vorgesehen, auf die später eingegangen wird.

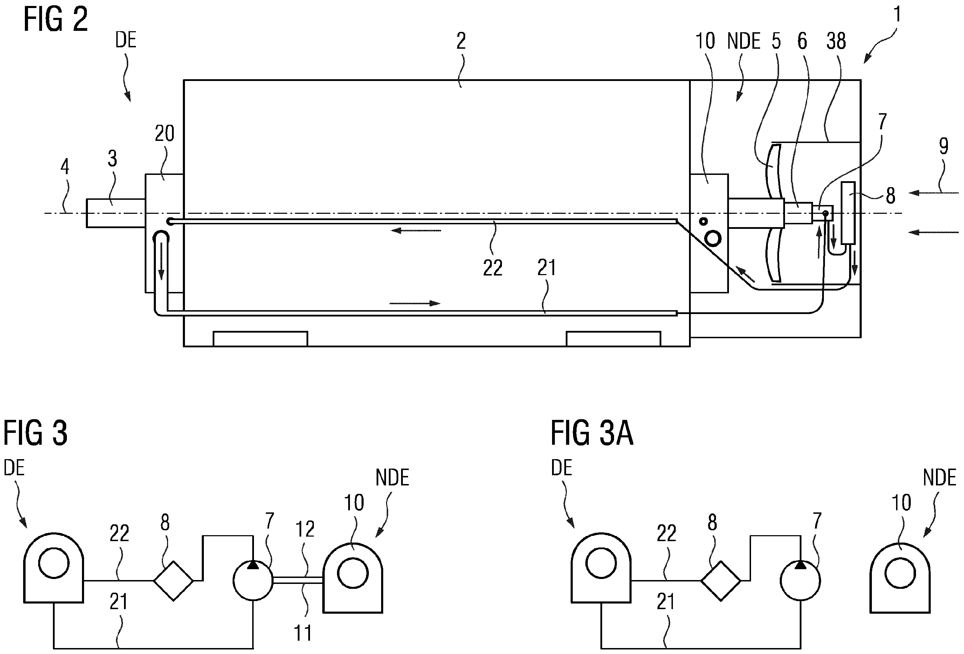

FIG 2 zeigt in einer Seitenansicht das Gehäuse 2 der dynamoelektrischen Maschine 1, wobei an den Stirnseiten des Gehäuses 2 die Lager 10, 20 positioniert sind. Des Weiteren ist auf der DE-Seite, in einer Verlängerung der Antriebswelle 3, ein Lüfter 5 angeordnet, der als Eigenlüfter fungiert. An einem axial daran anschließenden Wellenzapfen 6 ist eine Pumpenanordnung 7 vorgesehen, die das Öl von und zu den Lagern 10 und 20 u.a. über einen Rückkühler 8 fördert. Des Weiteren ist im Ansaugbereich oder Ausblasbereichs des Lüfters 5 der Rückkühler 8 vorgesehen, der das im Betrieb der dynamoelektrischen Maschine 1 aufgeheizte Öl der Lager 10, 20 rücckühlt. In diesem Fall ist der Kühler ein Luft-Öl-Wärmetauscher. Die Verrohrung der Ölleitungen zu und von den Lagern 10, 20 ist möglichst nah am Gehäuse 2 zu führen, um Beschädigungen dieser Verrohrung zu vermeiden. Luftführungen 38 gestalten eine zielführende Luftführung des Eigenlüfters.

Die Verrohrung der Ölleitungen besteht je nach Anforderung des Einsatzes der dynamoelektrischen Maschine 1 aus Kunststoff- oder Metallrohren.

Eine Verlegung der Ölleitungen von und zu den Lagern 10, 20 kann auch vollständig oder nur zum Teil innerhalb des Gehäuses 2 der dynamoelektrischen Maschine 1 erfolgen.

FIG 3 zeigt ein dazu prinzipielles strömungstechnisches Ersatzschaltbild. Das im Betrieb der dynamoelektrischen Maschine 1 aufgeheizte Öl in den Lagern 10 und 20 wird, sobald die Antriebswelle 3 sich dreht durch eine Pumpe 13 der Pumpenanordnung 7 von und zu den Lagern 10, 20 gefördert. Diese Förderung geschieht über dementsprechende Verrohrung, also der Zu- und Abflussleitungen 11 und 12 zu Lager 10, als auch der Zu- und Abflussleitungen 21, 22 des Lagers 20. In diesem Fall erhält das Lager 20 das rückgekühlte Öl über die Zuflussleitung 22. Das Lager 10 erhält als Zufluss das bereits von Lager 20 erwärmte Öl. Da aber das Lager 10 zusätzlich im Luftstrom des Eigenlüfters 5 positioniert ist, wird das Lager 10 ausreichend gekühlt.

FIG 3A zeigt eine weitere Ausführung, bei der lediglich das Lager 20, also das Lager auf der DE-Seite, eine separate Ölkühlung im erfindungsgemäßen Sinne erhält. Das Lager 10 ist dem Luftstrom des Lüfters 5 ausgesetzt und benötigt so keine zusätzliche Kühlung.

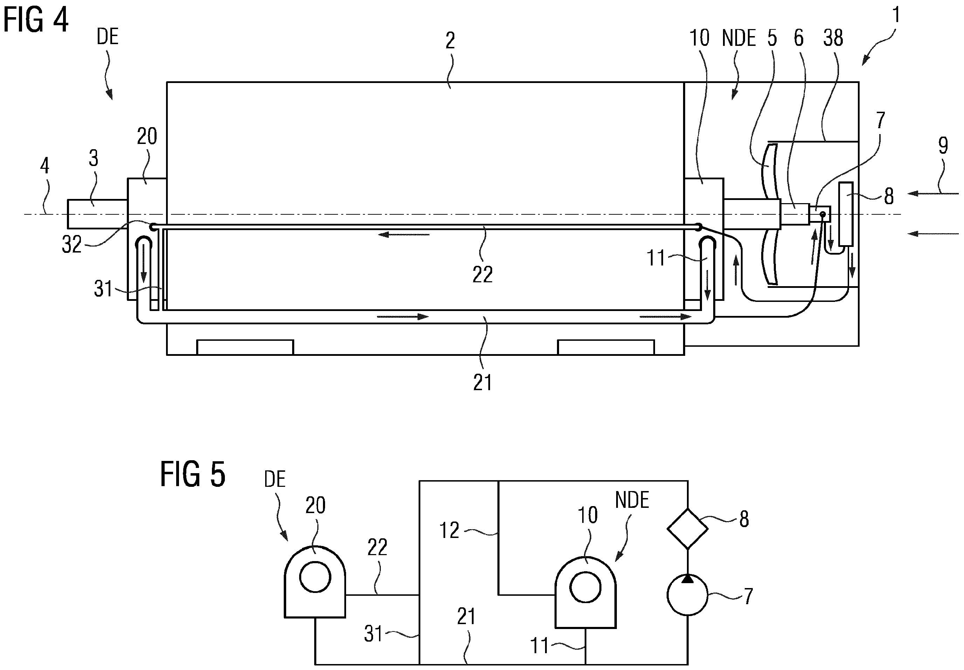

FIG 4 zeigt eine der FIG 2 ähnliche Maschine 1, jedoch wurde die Verrohrung von und zu den Lagern 10, 20, wie dies explizit der FIG 5 zu entnehmen ist, unterschiedlich aufgebaut, um die Kühlung des Lagers 10 zu verbessern. Dabei wird nunmehr auch das Lager 10 explizit gekühlt. Das aufgewärmte Öl des Lagers 10 und des Lagers 20 wird zusammengeführt und gemeinsam der Pumpenanordnung 7 zugeführt. Von dort wird das Öl über den Rückkühler 8 in einer gemeinsamen Leitung den beiden Zuflussleitungen 12 und 22 der jeweiligen Lager 10 und 20 bereitgestellt. Durch eine Bypassleitung 31 zwischen diesen Zuflussleitungen 12, 22 und den Abflussleitungen 11, 21 kann gegebenenfalls das Thermo-Management und Leckagesicherheit der Ölkühlung der Lager 10, 20 verbessert werden. Dazu sind Sensoren zumindest in den Lagern 10, 20, als auch in den Zuflussleitungen 12, 22 bzw. Abflussleitungen 11, 21 vorgesehen.

Der Rückkühler 8 ist in den Ausführungen nach FIG 2 und FIG 4 als Luft-Öl-Wärmetauscher ausgeführt, der vorzugsweise im Luftstrom des Eigenlüfters 5 angeordnet ist. Der Rückkühler 8 kann ebenso - strömungstechnisch gesprochen - nach dem Lüfter 5 angeordnet sein. Ebenso kann der Rückkühler 8 auch an einem anderen Ort neben oder über der dynamoelektrischen Maschine 1 oder sonst irgendwo platziert sein.

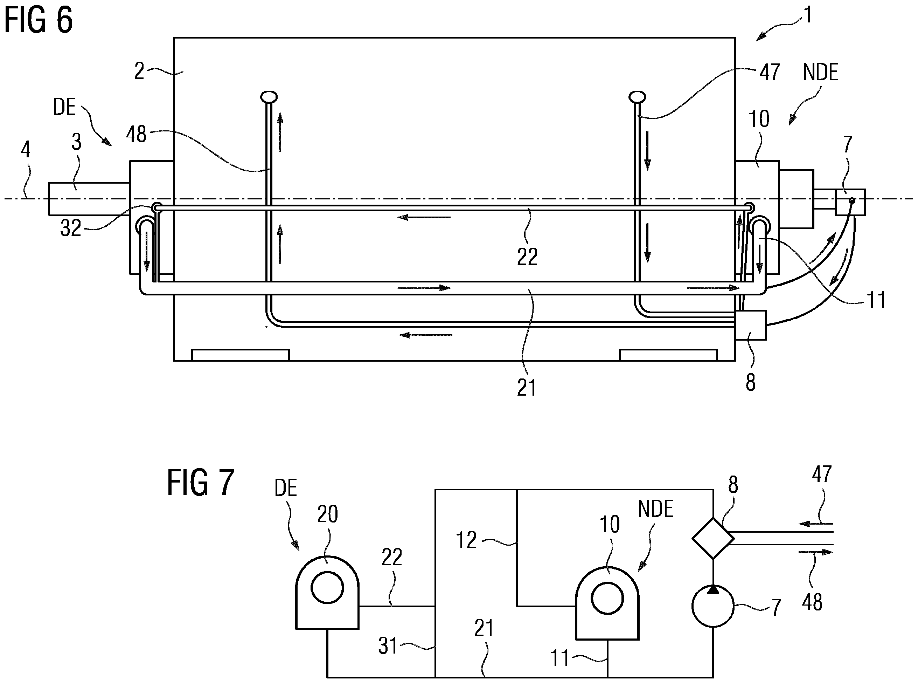

FIG 6 zeigt eine dynamoelektrische Maschine 1 in einer geschlossenen Bauform mit einer nicht näher dargestellten Wasserkühlung der dynamoelektrische Maschine 1. Der Rückkühler 8 ist dabei wassergekühlt und in den Wasserkreislauf der dynamoelektrischen Maschine 1 seriell oder parallel integriert. Es ist dabei ein Zufluss 47 und ein Rücklauf 48 zur Maschine vorgesehen. Dabei ist das Gehäuse 2 nach außen hin geschlossen ausgeführt, lediglich nicht näher dargestellte Gehäuserippen und/oder ein Wassermantel umgeben die dynamoelektrische Maschine 1. Es liegt ein geschlossener Innenkühlkreislauf vor, wobei nicht näher dargestellte Lüfter im Inneren der Maschine für eine Umwälzung der Luft und einen ausreichenden Wärmeübergang zum Wassermantel sorgen.

Das dazu korrespondierende strömungstechnische Ersatzschaltbild gemäß FIG 7 unterscheidet sich gegenüber FIG 5 lediglich dadurch, dass der Rückkühler 8 nunmehr kein Luft-Öl-Wärmetauscher, sondern ein Wasser-Öl-Wärmetauscher ist, d.h., der Rückkühler 8 hat als Sekundärkreislauf eine Wasserkühlung 47, 48. Das Wasser kann durch einen separaten Kreislauf bereitgestellt werden oder aber zumindest teilweise einem Hauptwasserkühlkreislauf der dynamoelektrischen Maschine 1 entnommen werden. Ebenso ist es möglich, dass der Rückkühler 8 in den Hauptkühlkreislauf seriell geschaltet ist.

Im vorliegenden Fall nach FIG 6 "teilen" sich dynamoelektrische Maschine 1 und die Ölkühlung den Sekundärkreislauf des Rückkühlers 8.

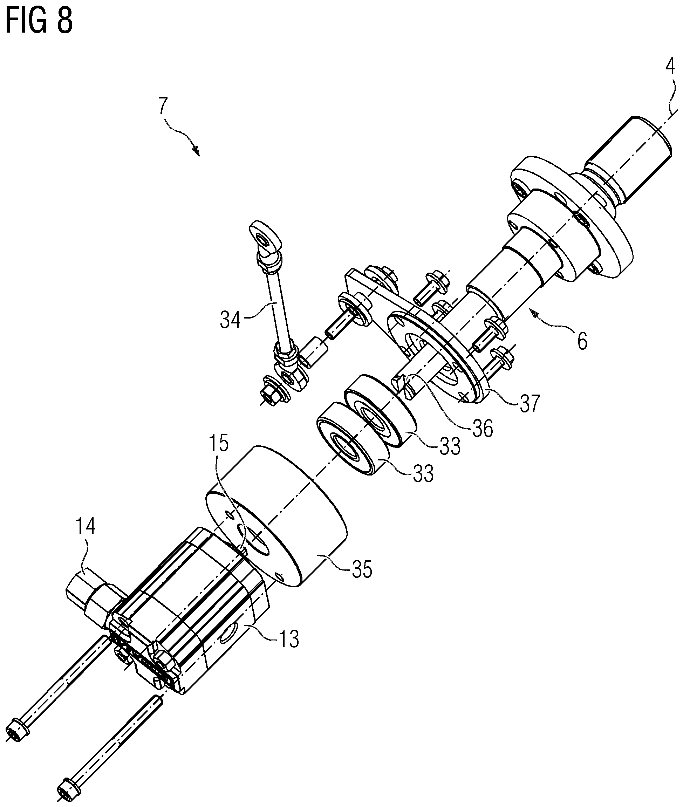

FIG 8 zeigt in einer Explosionsdarstellung die wesentlichen Einzelteile der Pumpenanordnung 7. Die Pumpenanordnung 7 weist dabei eine Pumpe 13, insbesondere eine Zahnradpumpe, auf, mit Anschlüssen 14, an die die Zu- und Ableitungen zu den Lagern 10 und 20 anschließbar sind. Eine mechanische Kopplung der Pumpe 13 mit der Antriebswelle 3 erfolgt nun über eine Pumpenwelle 15, die über eine Nut 36 des Wellenzapfens 6 drehfest verbunden ist. Der Wellenzapfen 6 ist in axialer, drehfester Verlängerung der Antriebswelle 3 angeordnet, vorzugsweise auf der DE-Seite der dynamoelektrischen Maschine 1. Ein Pumpenlager 33, das insbesondere als Schräg-Lager ausgeführt ist und in einem Lagergehäuse 35 angeordnet ist, lagert die Pumpenwelle 15 und den Wellenzapfen 6. In einem Lagerdeckel 37 ist eine Drehmomentstütze 34 angeordnet, die sich beispielsweise am Gehäuse 2 abstützt.

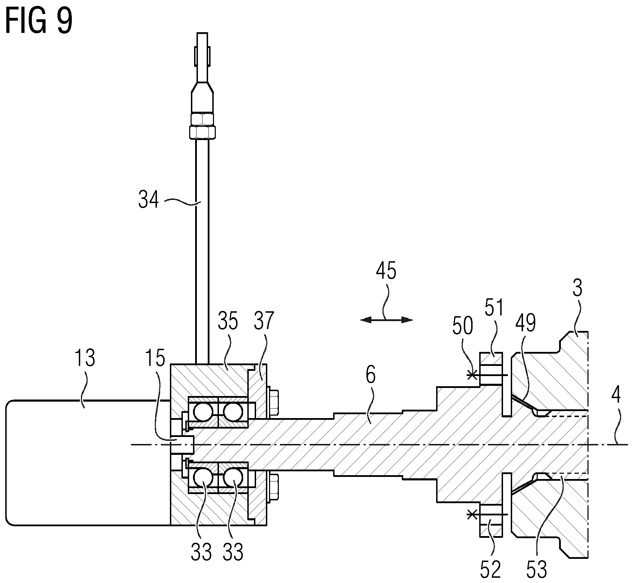

FIG 9 zeigt in zusammengebauten Zustand die Pumpenanordnung 7. Dabei ist zu sehen, dass der Wellenzapfen 6 in axialer Verlängerung der Antriebswelle 3 angeordnet ist. Pumpenantriebsachse und Achse 4 der Antriebswelle 3 fluchten dabei axial. Der Wellenzapfen 6 ist mittels eines Gewindes 53 in die Antriebswelle 3 eingesetzt. Eine konische Aufnahme, die einen Freistich 49 aufweist, wirkt dabei wie ein rotierendes Gelenk bei Umlaufbiegung. Schrauben 50 in der Bohrung 52 am Flansch 51 des Wellenzapfens 6 stützen sich ggf. an der Stirnseite der Antriebswelle 3 ab und ermöglichen so eine Feinjustierung. Die Schrauben 50 werden so ggf. auf Druck belastet. Um den Wellenzapfen 6 zusätzlich in der Antriebswelle 3 zu fixieren, ist dieser in dem Gewinde 53 zusätzlich verklebt.

Ein Reversierbetrieb der dynamoelektrischen Maschine 1, also ein Wechsel von Links- auf Rechtslauf ist dabei nur mit einem Umschaltgetriebe axial vor der Pumpe oder einem Umbau möglich, da die Pumpe nur in einer Richtung fördern kann.

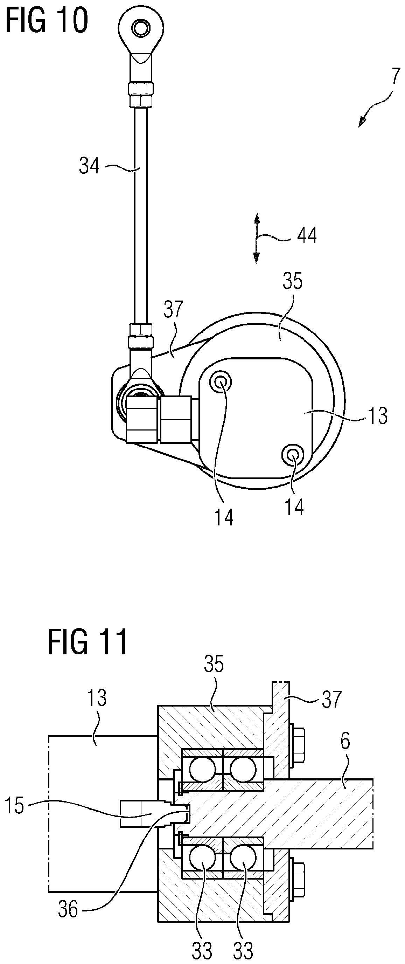

FIG 10 zeigt in einer Seitenansicht die Pumpenanordnung 7, die Pumpe 13 mit ihren Anschlüssen 14 für die Zuläufe und Abläufe zu den Lagern 10 und 20. Des Weiteren zeigt die FIG 10 die Drehmomentstütze 34, die an einem Lagerdeckel 37 angebracht ist. Axiale Bewegungen 45 und radiale Bewegungen 44 der Antriebswelle 3 aufgrund von thermischen Ausdehnungen oder Erschütterungen der dynamoelektrischen Maschine 1 können von der Drehmomentenstütze 34 aufgenommen werden.

FIG 11 zeigt in einer Detailansicht die Anordnung des Wellenzapfens 6 zur Pumpenwelle 15. Dabei ist die Pumpenwelle 15 über eine Nut 36 mit dem Wellenzapfen 6 drehfest verbunden. Schrägkugellager 33 sind in einem Lagergehäuse 35 eingesetzt und durch einen Lagerdeckel 37, der auch die Drehmomentstütze aufweist, gehalten.

Der Einsatz derartiger dynamoelektrischer Maschinen 1 erfolgt insbesondere im industriellen Umfeld als Antrieb für Kompressoren, Pumpen, Verdichtern. Dabei ist entscheidend, dass ein möglichst störungsfreier Betrieb aufrechterhalten wird.

## Patentansprüche

1. Dynamoelektrische Maschine (1), insbesondere Hochspannungsmaschine mit,
einer NDE-Seite und einer DE-Seite, wobei die DE-Seite einer anzutreibenden Arbeitsmaschine zugewandt ist,
einem Stator (41), der ein Wicklungssystem (39) aufweist, der durch elektromagnetische Wechselwirkung eine Rotation eines Rotors (42) bewirkt, welcher Rotor (42) mit einer Antriebswelle (3) drehfest verbunden ist,
zumindest einem ölgeschmierten Lager (10,20), das die Antriebswelle (3) führt und/oder hält,
einem Kühlsystem des Öls des Lagers (10,20), das zumindest einen Rückkühler (8) und die dazu notwendige Verrohrung von und zu dem Lager (10, 20) aufweist, wobei eine Förderung des Öls von, durch und zum Lager (10,20) mittels zumindest einer Fördereinrichtung erfolgt, die direkt mit der Antriebswelle (3) gekoppelt ist, so dass bei Drehung der Antriebswelle (3) eine Ölförderung erfolgt.

2. Dynamoelektrische Maschine (1) nach Anspruch 1, **dadurch gekennzeichnet , dass** Antriebswelle (3) und Welle der Fördereinrichtung axial fluchten.

3. Dynamoelektrische Maschine (1), nach Anspruch 1 oder 2, **dadurch gekennzeichnet , dass** die Fördereinrichtung vorzugsweise auf der NDE-Seite angeordnet ist.

4. Dynamoelektrische Maschine (1) nach einem der vorhergehenden Ansprüche, **dadurch gekennzeichnet , dass** die Fördereinrichtung eine Pumpe (7) ist.

5. Dynamoelektrische Maschine (1) nach einem der vorhergehenden Ansprüche, **dadurch gekennzeichnet , dass** der Rückkühler (8) das Öl mittels Luft oder einer Flüssigkeit rückkühlt.

6. Dynamoelektrische Maschine (1) nach Anspruch 5, **dadurch gekennzeichnet , dass** der Rückkühler (8) auf der NDE-Seite angeordnet ist.

7. Dynamoelektrische Maschine (1) nach Anspruch 1, **dadurch gekennzeichnet , dass** die Fördereinrichtung über einen Riemenantrieb/Zahnrad antreibbar ist.

8. Dynamoelektrische Maschine (1) nach Anspruch 7, **dadurch gekennzeichnet , dass** die Fördereinrichtung auf der DE-Seite angeordnet ist.

9. Dynamoelektrische Maschine (1) nach einem der vorhergehenden Ansprüche, **dadurch gekennzeichnet , dass** die dynamoelektrische Maschine (1) luftgekühlt ist und eine Rückkühlung des Öls des Lagers (10,20) durch einen Öl-Luft-Wärmetauscher als Rückkühler (8) vorgesehen ist, der im Luftweg der luftgekühlten dynamoelektrische Maschine (1) angeordnet ist.

10. Dynamoelektrische Maschine (1) nach Anspruch 9, **dadurch gekennzeichnet , dass** der Öl-Luft-Wärmetauscher unmittelbar vor oder nach dem Lüfter (5) der dynamoelektrischen Maschine (1) angeordnet ist.

11. Dynamoelektrische Maschine (1) nach einem der Ansprüche 1 bis 8, **dadurch gekennzeichnet , dass** die dynamoelektrische Maschine (1) wassergekühlt ist und eine Rückkühlung des Öls des Lagers (10,20) durch einen Öl-Wasser-Wärmetauscher als Rückkühler (8) vorgesehen ist, der ganz oder zumindest teilweise von dem für die dynamoelektrische Maschine (1) vorgesehenen Kühlwasser durchflossen ist.

12. Dynamoelektrische Maschine (1) nach Anspruch 11, **da- durch gekennzeichnet** , dass die Pumpe des Wasserkreislaufes direkt mit der Antriebswelle (3) gekoppelt ist.

13. Verwendung einer dynamoelektrischen Maschine (1) nach einem der vorhergehenden Ansprüche 1 bis 12, insbesondere als Antrieb für Kompressoren, Pumpen, Verdichter etc.
